**Europäisches Patentamt**

**European Patent Office** (11) Numéro de publication: **0 142 449**

**Office européen des brevets** **B1**

(12) **FASCICULE DE BREVET EUROPÉEN**

(45) Date de publication du fascicule du brevet: (51) Int. Cl.⁴: **G 07 C 9/00**, G 06 K 19/08
**19.04.89**

(21) Numéro de dépôt: **84402312.7**

(22) Date de dépôt: **14.11.84**

(54) **Carte accréditive.**

(30) Priorité: **16.11.83 FR 8318191**

(43) Date de publication de la demande:
**22.05.85 Bulletin 85/21**

(45) Mention de la délivrance du brevet:
**19.04.89 Bulletin 89/16**

(84) Etats contractants désignés:
**AT BE CH DE FR GB IT LI LU NL SE**

(56) Documents cité:
**DE-A-2 230 400**
**FR-A-2 069 670**
**US-A-3 383 657**

**V.D.I. NACHRICHTEN, vol. 29, no. 36, 5 septembre
1975, page 10, Düsseldorf, DE; F.W.: "17 Millionen
Fingerabdrücke"**

(73) Titulaire: **Desgorces, Jean, 15, Boulevard Magenta,
F-77300 Fontainebleau (FR)**

(72) Inventeur: **Desgorces, Jean, 15, Boulevard
Magenta, F-77300 Fontainebleau (FR)**

(74) Mandataire: **Laget, Jean- Loup, Cabinet Pierre
Loyer 77, rue Boissière, F-75116 Paris (FR)**

## Description

Les cartes accréditives se sont généralisées et leur utilisation est maintenant très courante, pour effectuer des paiements, des retraits d'argent, pour autoriser l'accès à un local contrôlé, pour déclencher l'ouverture d'une porte ou d'un coffre, par exemple. Ces cartes comportent en général l'identification du titulaire sous forme de caractères lisibles, et elles portent sur des pistes magnétiques, des informations codées non visibles. Il arrive cependant que ces informations puissent être déchiffrées et qu'un fraudeur puisse ainsi utiliser une carte ne lui appartenant pas. Dans le cas des distributeurs de billets, il arrive également que la possession illicite d'une carte et de son numéro de code individuel permette à un fraudeur de procéder à des opérations de retrait sur un compte ne lui appartenant pas.

Pour éviter ces inconvénients, on a cherché à identifier le détenteur d'une carte accréditive en faisant figurer sur cette carte une image qui est strictement personnelle au détenteur de la carte.

Il est ainsi connu par le document US-A-3 383 657 de proposer une carte d'accès à un bâtiment, où les données relatives aux empreintes digitales du porteur de la carte sont mises en mémoire sur une piste magnétique portée par la carte. Le porteur de la carte présente sa carte et son empreinte digitale à un appareil qui lit l'empreinte et compare les signaux à ceux de la piste magnétique pour autoriser l'accès en cas de concordance. Cependant, la carte n'assure que la fonction unique de garder en mémoire des données d'identification.

D'un autre côté, le prix de revient d'une carte accréditive est loin d'être négligeable et une part notable de ce prix de revient est imputable à la partie purement magnétique. Enfin, il arrive, si les cartes sont manipulées en même temps que des objets métalliques, qu'elles soient démagnétisées et ainsi rendues inutilisables.

L'invention a pour but d'éviter ces inconvénients en procurant une carte bancaire affranchie du codage magnétique d'informations et d'un éventuel numéro de code individuel. Un autre but de l'invention est de permettre l'utilisation d'une carte bancaire par son seul titulaire, au moyen d'une vérification locale sans recours à un fichier central.

L'invention a pour objet une carte bancaire, sans piste magnétique, caractérisée en ce qu'elle comporte, imprimées en caractères directement lisibles par machine sans décryptage, d'une part des informations relatives au numéro du compte sur lequel sont comptabilisées les opérations, d'autre part des informations d'identification correspondant aux coordonnées des points singuliers d'une empreinte digitale du titulaire de la carte, constituant une image numérisée de ladite empreinte.

Selon l'invention, la carte bancaire porte des informations chiffrées au moyen du code à "barres", c'est-à-dire des chiffres correspondant à des traits d'épaisseurs normalisées, qui sont lisibles par des lecteurs optiques ou par un crayon magnétique, de façon rapide et automatique. Ce code à "barres" est maintenant généralisé aux produits alimentaires, aux livres et à toutes sortes d'autres produits. Ainsi, au lieu de porter des informations "secrètes" codées sur une ou plusieurs pistes magnétiques, la carte bancaire selon l'invention porte des informations imprimées, immédiatement lisibles. Il en résulte une économie importante dans le prix de revient de l'établissement de la carte, qui se trouve réduit de façon notable.

Du fait que les informations portées par la carte sont apparentes, il faut, bien entendu, que la carte ne soit utilisable que par son titulaire. A cet effet, on reproduit sur la carte une caractéristique propre au titulaire, et qui soit toujours à sa disposition par un autre moyen, sans mémorisation. Cette caractéristique, purement individuelle, est une empreinte digitale, dont le titulaire a toujours la disposition.

Cette empreinte, cependant, n'est pas reproduite par photographie, mais par dactyloscopie, au moyen d'une camera video ou d'un "scanner" ou d'un capteur d'image. A cet effet, on filme au moyen d'une camera video une empreinte digitale du titulaire dans des conditions rigoureuses d'orientation du doigt.

Les signaux numériques relevés par la camera video, ou le capteur d'images, ou le scanner, correspondent par exemple aux coordonnées des points singuliers de l'empreinte digitale.

Ces points singuliers sont les points de confluent des lignes constituant l'empreinte digitale, les points de rebroussement de ces lignes, les points centraux ou ombilics, par exemple. Il est usuel de dénombrer dans une empreinte une trentaine de points singuliers. Selon l'invention, on se limite à 27 points singuliers au maximum. Les coordonnées, cartésiennes ou polaires, de ces points singuliers, sont transcrites sur la carte bancaire de façon à constituer une image numérisée de l'empreinte du titulaire, sur un emplacement bien déterminé de la carte, et dans une orientation bien définie.

Ainsi, la carte porte à la fois des informations facilement lisibles sans recours à la magnétisation, et une image d'une empreinte digitale particulière au titulaire.

Lorsqu'il se présente à un distributeur de billets, pour retirer des billets sur son compte bancaire ou postal, le titulaire de la carte présente sa carte qui est lue par l'appareil. Au lieu de fournir à l'appareil un code "secret", le titulaire présente son doigt devant une camera video qui lit son empreinte digitale et vérifie la conformité avec celle portée par la carte. En cas de conformité, l'appareil valide l'opération et délivre les billets. Les informations lisibles en code à "barres" servent par exemple à procéder aux opérations comptables sur le compte du titulaire.

En cas de non-conformité, l'appareil conserve la carte accréditive et conserve également par enregistrement video l'empreinte digitale du fraudeur.

L'appareil de contrôle placé au distributeur de billets doit comprendre une camera video pour effectuer dans des conditions rigoureuses d'orientation, la dactyloscopie de l'empreinte digitale du titulaire de la carte, et un appareillage électronique suffisant pour comparer les signaux numériques de la camera et ceux résultant de la lecture de l'image d'empreinte portée par la carte.

La carte bancaire selon l'invention est d'un prix de revient réduit car elle ne fait pas appel à la magnétisation de pistes. En cas de perte ou de vol, elle n'est pratiquement pas utilisable par une personne autre que son titulaire. Du fait que la sécurité d'utilisation vient de l'empreinte digitale du titulaire lui-même, il n'y a pas de code individuel secret à prévoir et à mémoriser, et les informations relatives au numéro de compte bancaire, par exemple, peuvent être inscrites en clair au moyen du code à "barres" pour être lisibles de façon automatique.

## Revendication

Carte bancaire, sans piste magnétique, caractérisée en ce qu'elle comporte, imprimées en caractères directement lisibles par machin sans décryptage, d'une part des informations relatives au numéro du compte sur lequel sont comptabilisées les opérations, d'autre part des informations d'identification correspondant aux coordonnées des points singuliers d'une empreinte digitale du titulaire de la carte, constituant une image numérisée de ladite empreinte.

## Patentanspruch

Bankkarte ohne magnetische Spur, dadurch gekennzeichnet daß sie zum einen Angaben über die Nummer des Bankkontos über das die Buchungen abgewickelt werden, und zum anderen Angaben zur Identifizierungen der Koordinaten der Einzelpunkten eines Fingerabdruckes des Karteninhabers, die ein digitalisiertes Bild des Abdruckes wiedergeben, enthält, wobei diese Angaben maschinell, unmittelbar, ohne Entcodung, mit lesbaren Zeichen aufgedruckt sind.

## Claim

Bank card, without magnetic track, characterized in that it comprises, printed in types directly readable by a machine without deciphering, on the one part informations relating to the number of the account in which operations are computed, on the other part identification informations corresponding to coordinates of singular points of a finger print of the card titular, constituting a digitalized image of said print.